# EUROPÄISCHE PATENTSCHRIFT

(11) **EP 2 018 476 B1**
(45) Veröffentlichungstag und Bekanntmachung des Hinweises auf die Patenterteilung: **11.02.2015**
(21) Anmeldenummer: 07722381.6
(22) Anmeldetag: 07.05.2007
(51) Int. Cl.: F03D 7/04, F03D 7/02

(54) **GESTAFFELT ABSCHALTBARER WINDPARK**
WIND FARM WHICH IS DISCONNECTABLE IN STAGGERED FASHION
PARC ÉOLIEN À DÉCONNEXION ÉTAGÉE

(30) Priorität: 10.05.2006 DE 102006021982
(43) Veröffentlichungstag der Anmeldung: 28.01.2009
(73) Patentinhaber: Senvion SE, 22297 Hamburg (DE)
(72) Erfinder: ALTEMARK, Jens, 24768 Rendsburg (DE); VON MUTIUS, Martin, 24358 Ascheffel (DE); STEUDEL, Dirk, 24116 Kiel (DE)
(74) Vertreter: Groth, Wieland
(86) Internationale Anmeldenummer: PCT/DE2007/000827
(87) Internationale Veröffentlichungsnummer: WO 2007/128287

(56) Entgegenhaltungen:
- EP-A- 1 132 614
- WO-A-2004/099604
- WO-A-2004/114493
- DE-A1- 19 532 409
- US-A1- 2005 090 937

## Beschreibung

Die Erfindung betrifft ein Verfahren zum Betreiben eines Windparks sowie ein Verfahren zum Betreiben einer Windenergieanlage dieses Windparks, als auch einen Windpark und eine Windenergieanlage mit dem die Verfahren durchführbar sind.

Aus der WO 03/030329 A1 ist ein Verfahren zum Betrieb eines Windparks bekannt, der an ein elektrisches Versorgungsnetz angeschlossen ist. Dabei ist eine Korrelation zwischen Windgeschwindigkeit und Abgabeleistung des Windparks in einer Datenverarbeitungseinheit abgelegt. Diese Korrelation steuert die Abgabeleistung des Windparks in Abhängigkeit vom Wind in der Weise, dass bei hohen Windgeschwindigkeiten der Windpark nur eine geringere Abgabeleistung zur Verfügung stellen kann, um die einzelnen Windenergieanlagen nicht zu schädigen. Nachteilig an dem beschriebenen Windpark ist, dass das Steuerungsverfahren relativ kompliziert ist, da die windgeschwindigkeitsabhängige Leistungsregelung schnell zu Regelungsinstabilitäten führt und die Abgabeleistung durch die Windgeschwindigkeit bestimmt wird.

Aus der WO 2004/114493 A2 ist ein redundantes elektrisches System für eine einzelne Windenergieanlage bekannt, das darin besteht, Systemeinheiten der Windenergieanlage durch ein Parallelmodul zu doppeln. Bei Ausfall eines Moduls übernimmt das zugehörige Parallelmodul zumindest teilweise die elektrische Leistungserzeugung.

Die DE 195 32 409 A1 betrifft ein Verfahren zum Betreiben einer Windenergieanlage, indem die Leistung ab Erreichen einer überlastungsgefährdenden Windgeschwindigkeit vermindert wird, aber nicht vollständig abgeschaltet wird.

Die EP 1 132 614 A2 betrifft ein Regelungssystem für eine Windenergieanlage, die es ermöglicht die bei optimierten Windkraftanlagen erforderliche Leistungsreduzierung im Bereich der Nennwindgeschwindigkeit und bei hohen Windgeschwindigkeiten auf das den aktuellen Betriebsbedingungen entsprechende wirtschaftliche Optimum einzuschränken.

Aus der US 2005/0090937 A1 ist ein Windpark bekannt, wobei der Windpark beschreibungsmäßig in Gruppen eingeteilt ist.

Es ist Aufgabe der Erfindung, einen Windpark und ein Verfahren zum Betrieb eines Windparks zur Verfügung zu stellen, der bzw. das bei einer möglichst großen Breite an Windgeschwindigkeiten Strom liefert. Insbesondere ist es Aufgabe der Erfindung, einen Windpark und ein Verfahren zum Betrieb eines Windparks, sowie eine Windenergieanlage mit einem Verfahren zum Betrieb dieser Windenergieanlage zur Verfügung zu stellen, der bzw. das bei einer extern vorgegebenen Abgabeleistung bei einer möglichst großen Breite an Windgeschwindigkeiten Strom liefert.

Die erste Aufgabe wird durch ein eingangs genanntes Verfahren mit den Merkmalen des Anspruchs 1 erfüllt. Erfindungsgemäß werden die mindestens zwei Windenergieanlagen des Windparks in vorgebbare Gruppen aufgeteilt. Dabei kann die Gruppenaufteilung über die Zeit Veränderungen unterworfen werden. Jeder Windenergieanlage der ersten Gruppe wird wenigstens ein erster Abschaltwert und jeder Windenergieanlage der zweiten Gruppe wird wenigstens ein vom wenigstens einem ersten Abschaltwert verschiedener, zweiter Abschaltwert zugeordnet. Daneben wird für jede der mindestens zwei Windenergieanlagen jeweils wenigstens ein Istwert einer Windgeschwindigkeit und/oder eines damit verbundenen Parameters ermittelt. Jeder einer Windenergieanlage zugeordnete wenigstens eine Istwert wird einem derselben Windenergieanlage zugeordneten wenigstens einen Abschaltwert zugeordnet. Die Istwerte werden mit den zugeordneten Abschaltwerten verglichen und bei Überschreiten eines Abschaltwertes durch den zugeordneten Istwert wird die zugeordnete Windenergieanlage oder Gruppe von Windenergieanlagen automatisch abgeschaltet.

In einer bevorzugten Ausführungsform der Erfindung, wird nicht die Windgeschwindigkeit selbst, sondern ein mit der Windgeschwindigkeit verbundener Parameter gemessen, wie beispielsweise der Einstellwinkel des Rotorblatts. Die zugeordneten Abschaltwerte sind in dieser Ausführungsform der Erfindung Abschaltwinkelwerte und jeder Windenergieanlage wird vorzugsweise genau ein Abschaltwinkelwert zugeordnet. Für jede der Windenergieanlagen wird ständig der Einstellwinkel des Rotorblattes mit einer Einstellwinkelmessvorrichtung gemessen. Abschaltwinkelwert und Einstellwinkel werden in einer Vergleichseinrichtung verglichen und bei Überschreiten des Abschaltwinkelwertes durch den gemessenen Einstellwinkel, wird die Windenergieanlage oder die Gruppe von Windenergieanlagen durch eine Abschalteinrichtung vorzugsweise automatisch abgeschaltet.

Der wenigstens eine einer bestimmten Windenergieanlage zugeordnete Istwert ist in einer besonders bevorzugten Ausführungsform der Erfindung als wenigstens ein Mittelwert gewählt. Unter Mittelwert wird im Folgenden insbesondere ein gleitender Mittelwert oder ein Up-Down-Counter-Mittelwert oder ein sonstiges mittelndes Berechnungsverfahren verstanden. Im ersten Fall wird die durchschnittliche Windgeschwindigkeit fortlaufend für ein zurückliegendes Zeitintervall gleich bleibender Länge berechnet. Im zweiten Fall wird die Zeit gemessen, die die Windgeschwindigkeit oberhalb eines vorgegebenen Abschaltwertes ist. Bei Unterschreiten des Abschaltwertes zu einem bestimmten Zeitpunkt, wird die Zeit von diesem Zeitpunkt an von neuem gemessen. Ist die Windgeschwindigkeit eine vorgegebene Zeitspanne oberhalb des Wertes, wird ein Abschaltsignal ausgesendet.

In einer bevorzugten Weiterbildung der Erfindung, werden mehrere gleitende Mittelwerte über genauso viele verschiedene Mittlungszeiten bestimmt. Die durchschnittliche und gleitende Windgeschwindigkeit wird für vorzugsweise drei voneinander verschiedene Mittlungszeiten und für jede der Windenergieanlagen ermittelt. Die den gleitenden Mittelwerten zugeordneten Abschaltwerte sind als Abschaltmittelwerte für dieselben Mittlungszeiten und für jede der Gruppen von Windenergieanlagen oder einzelnen Windenergieanlagen festgelegt.

Die Abschaltmittelwerte der verschiedenen Gruppen oder Windenergieanlagen über dieselbe Mittlungszeit sind verschieden voneinander. Jeder der unterschiedlichen Mittlungszeiten kann damit ein anderer Abschaltmittelwert zugeordnet werden. Vorzugsweise sind gleichen Mittlungszeiten der verschiedenen Gruppen voneinander nur geringfügig unterschiedliche Abschaltmittelwerte zugeordnet, während unterschiedlichen Mittlungszeiten derselben Gruppe stärker unterschiedliche Abschaltmittelwerte zugeordnet sind. Durch die Einteilung des Windparks in Gruppen mit verschiedenen Abschaltmittelwerten wird einem plötzlichen Abschalten des gesamten Parks bei Überschreiten einer der Abschaltmittelwerte durch den Istwert entgegengewirkt.

Vorzugsweise umfasst wenigstens eine der Gruppen mindestens zwei Windenergieanlagen, und besonders bevorzugt umfasst jede der Gruppen mindestens zwei Windenergieanlagen. Abschalten im Sinne dieser Erfindung bedeutet nicht notwendiger Weise das Stillsetzen des Rotors, sondern es kann auch nur die Beendigung der Strömeinspeisung in das elektrische Netz bedeuten.

In einer bevorzugten Ausführungsform der Erfindung, wird die Windgeschwindigkeit an jeder Windenergieanlage entlang des Parks mit Hilfe zugehöriger Windgeschwindigkeitsmesseinrichtungen ständig gemessen. Die Windgeschwindigkeitsmesseinrichtung kann eine Datenverarbeitungseinheit umfassen, in der die gleitenden Mittelwerte für die verschiedenen Mittlungszeiten für jede Windenergieanlage individuell berechnet werden. Die gleitenden Mittelwerte der wenigstens einen vorgegebenen Mittlungszeit, vorzugsweise jedoch den verschiedenen vorgegebenen Mittlungszeiten, werden einer Vergleichseinrichtung zugeführt und mit den, den gleichen Mittlungszeiten zugeordneten Abschaltmittelwerten der Windgeschwindigkeit verglichen. Wenn einer der gleitenden Mittelwerte einen der gleichen Mittlungszeit zugehörigen Abschaltmittelwert einer Windenergieanlage überschreitet, wird die Windenergieanlage abgeschaltet. Es können auch die Windenergieanlagen der gesamten Gruppe abgeschaltet werden, der die eine Windenergieanlage angehört. Die Erfassung der Windgeschwindigkeitsmesswerte, deren Weiterverarbeitung, ihr Vergleich und evtl. der Anschaltbefehl können hierbei von einer zentralen Einheit im Windpark oder besonders bevorzugt, dezentral, durch Steuerungen der einzelnen Windenergieanlagen durchgeführt werden. Im letzten genannten Fall erfolgt nur die Zuordnung der Windenergieanlage zu den Gruppen durch die zentrale Einheit, die räumlich auch als Modul in einer Windenergieanlage ausgebildet sein kann.

Günstigenfalls sind die Abschaltmittelwerte desto höher gewählt, je kürzer die Mittlungszeiten innerhalb einer Gruppe gewählt sind. Somit brauchen Windenergieanlagen bei nur geringfügig erhöhten Windgeschwindigkeiten erst nach einer längeren Zeit abgeschaltet zu werden, während die gleiche Windenergieanlage bei starken Windböen schon nach einer kürzeren Zeit, und bei orkanartigen Böen umgehend abgeschaltet wird.

Vorzugsweise beinhaltet der Satz von Abschaltparametern Parameter für genau zwei oder genau drei verschiedene Mittlungszeiten, vorzugsweise betragen die Mittlungszeiten 10min, 1 min und 1 s.

Durch die Wahl unterschiedlicher Abschaltmittelwerte für gleiche Mittlungszeiten für die verschiedenen Gruppen von Windenergieanlagen wird das vollständige "Ausblasen" eines Windparks weitgehend vermieden. Bei Überschreiten eines Abschaltmittelwertes durch einen der gleitenden Mittelwerte an einer Windenergieanlage wird diese Windenergieanlage oder es werden, in einer bevorzugten Ausführungsform der Erfindung, alle Windenergieanlagen ausgeschaltet, die derselben Gruppe -zu dem Zeitpunkt zugeordnet sind. Die Windenergieanlagen der anderen Gruppen bleiben weiterhin in Betrieb. Zwar wird damit die Leistung des Windparks verringert, jedoch wird wenigstens diese geringere Leistung zur Verfügung gestellt.

Um die langfristige Überlastung einer Gruppe von Windenergieanlagen durch die Wahl besonders hoher Abschaltwerte zu verringern, können die Abschaltwerte nach einer vorgegebenen Zeitspanne durch die Gruppen hindurch getauscht werden, vorzugsweise zyklisch. Somit lässt sich eine statistisch gleichmäßige Belastung der Windenergieanlagen über die Zeit realisieren.

Die Aufgabe wird hinsichtlich des Windparks durch einen Windpark mit wenigstens zwei Windenergieanlagen, der zum Anschluss an ein Stromnetz bestimmt ist, mit den Merkmalen des Anspruchs 12 erfüllt.

Der erfindungsgemäße Windpark weist vorzugsweise an jeder der Windenergieanlagen jeweils eine Messeinrichtung auf, die, vorzugsweise ständig, einen Istwert einer Windgeschwindigkeit und/oder einen mit der Windgeschwindigkeit verbundenen Parameter ermittelt. In einer Zuordnungseinrichtung ist die Menge der Windenergieanlagen in wenigstens zwei vorgebbare Gruppen aufgeteilt. Jede Windenergieanlage einer ersten Gruppe ist wenigstens ein erster Abschaltwert, und jeder Windenergieanlage einer zweiten Gruppe ist ein vom ersten Abschaltwert verschiedener, zweiter Abschaltwert zugeordnet. In einer Vergleichseinrichtung findet ein Vergleich für jede der Windenergieanlagen zwischen dem zugeordneten Abschaltwert und dem wenigstens einen Istwert einer Windgeschwindigkeit und/oder eines damit verbundenen Parameters statt. Bei Überschreiten des wenigstens einen Abschaltwertes durch den wenigstens einen zugeordneten Istwert, schaltet die Abschalteinrichtung die zugehörige Windenergieanlage oder sogar die ganze Gruppe von Windenergieanlagen ab.

Vorzugsweise ist an jeder Windenergieanlage eine WindgeschwindigkeitsMesseinrichtung zur Bestimmung der Windgeschwindigkeit und Berechnung der gleitenden Mittelwerte angeordnet.

Die Zuordnung der Abschaltmittelwerte und Mittlungszeiten zu den einzelnen Gruppen, sowie auch die Aufteilung der Gruppen untereinander, erfolgt durch eine Zuordnungseinrichtung. Die Gruppenzuordnung wird vorzugsweise nach vorgegebenen Zeitintervallen, vorzugsweise zyklisch, durchgetauscht.

Bei Windparks, deren Windenergieanlagen über einen betrachteten Zeitraum, beispielsweise über ein Jahr gesehen, unterschiedlichen Windgeschwindigkeiten ausgesetzt sind, können die den schwächeren Winden ausgesetzten Windenergieanlagen einer Gruppe mit hohen Abschaltmittelwerten und die stärkeren Winden ausgesetzten Windenergieanlagen können einer Gruppe mit tiefen Abschaltmittelwerten zugeordnet sein.

Der Vergleich der gleitenden Mittelwerte der Windgeschwindigkeit mit den Abschaltmittelwerten erfolgt in einer zentralen oder mehreren dezentralen, jeweils bei einer Windenergieanlage angeordneten Vergleichseinrichtungen. Die bei Überschreiten der Abschaltmittelwerte erforderliche Abschaltung der jeweiligen Windenergieanlage erfolgt durch eine dafür vorgesehene zentrale oder mehrere dezentrale, jeweils bei einer Windenergieanlage angeordnete Abschalteinrichtung. Die genannten Einrichtungen können auch als Programme eines programmierbaren Prozessors ausgeführt sein.

Hinsichtlich einer Windenergieanlage des Windparks wird vorzugsweise wenigstens ein Istwert einer Windgeschwindigkeit und/oder eines damit verbundenen Parameters für die wenigstens eine Windenergieanlage ermittelt. Es wird eine veränderbare Abgabeleistung und/oder ein damit verbundener Parameter der wenigstens einen Windenergieanlage vorgegeben, und es wird ein mit der veränderbaren Abgabeleistung und/oder dem damit verbundenen Parameter korrespondierender abgabeleistungsbezogener Abschaltwert zur Verfügung gestellt. Der mit der Abgabeleistung verbundene Parameter kann z.B. eine Drehzahl des Rotors sein. Der korrespondierende abgabeleistungsbezogene Abschaltwert kann extern vorgegeben werden. Es ist jedoch auch denkbar, dass er aus der veränderbar vorgegebenen Abgabeleistung, beispielsweise rechnerisch ermittelt wird. Dem Istwert wird vorzugsweise genau ein abgabeleistungsbezogener Abschaltwert zugeordnet und mit diesem verglichen. Bei Überschreiten des abgabeleistungsbezogenen Abschaltwertes durch den Istwert der Windgeschwindigkeit und/oder eines damit verbundenen Parameters, wird die wenigstens eine Windenergieanlage automatisch abgeschaltet.

Es hat sich gezeigt, dass eine mit einer geringen Abgabeleistung gefahrene Windenergieanlage bei anderen, insbesondere höheren Abschaltwerten abgeschaltet werden kann als eine mit hoher Abgabeleistung gefahrene Windenergieanlage und dabei gleichen Belastungen ausgesetzt ist.

Das gilt insbesondere, wenn gleichzeitig mit der Leistung auch die Drehzahl reduziert wird. Das kann ein Betrieb mit konstantem Drehmoment sein, d.h. die Drehzahl wird im gleichen Umfang reduziert wie die Leistung. Für das Generator- und Umrichtersystem ist ein darüber hinausgehende Reduzierung des Drehmomentes vorteilhaft.

In einer bevorzugten Ausführungsform des erfindungsgemäßen Verfahrens, werden gleitende Mittelwerte der Windgeschwindigkeit für wenigstens eine vorgegebene Mittlungszeit als Istwerte ermittelt. Jedem Istwert wird ein abgabeleistungsbezogener Abschaltwert zugeordnet, welcher von der vorzugsweise extern vorgegebenen Abgabeleistung und von der Mittlungszeit bestimmt wird. Der abgabeleistungsbezogene Abschaltwert wird vorzugsweise aus zwei Abschaltwerten für die Windenergieanlage und für die vorgegebene Mittlungszeit und zugehörigen vorgegebenen Abgabeleistungen bestimmt. Die Bestimmung erfolgt dann z.B. durch Interpolation.

Es hat sich gezeigt, dass eine mit einer geringen Abgabeleistung gefahrene Windenergieanlage höheren Windgeschwindigkeiten ausgesetzt werden kann, ohne geschädigt zu werden, während eine bei der Nennleistung gefahrene Windenergieanlage nur relativ geringen Windgeschwindigkeiten aussetzbar ist. Diesem Zusammenhang wird erfindungsgemäß dadurch Rechnung getragen, dass eine veränderbare Abgabeleistung der Windenergieanlage vorgegeben wird und dazu abgabeleistungsbezogene Abschaltmittelwerte bestimmt werden. Dazu werden der wenigstens einen Windenergieanlage wenigstens zwei verschiedene Abschaltmittelwerte zugeordnet. Jedem der wenigstens zwei Abschaltmittelwerte wird eine zugehörige andere Abgabeleistung zugeordnet. Für eine beliebige vom Windparkbetreiber oder Netzbetreiber abgeforderte Abgabeleistung kann mittels einer Recheneinheit aus den wenigstens zwei verschiedenen Abschaltmittelwerten und den zugehörigen Abgabeleistungen ein abgabeleistungsbezogener Abschaltmittelwert bestimmt werden.

Die abgabeleistungsbezogenen Abschaltmittelwerte können durch Interpolation zwischen den wenigstens zwei Abschaltmittelwerten berechnet werden oder dadurch bestimmt werden, dass eine Vielzahl von vorgebbaren Abgabeleistungen und korrespondierenden abgabeleistungsbezogenen Abschaltmittelwerten in einer Datenspeichereinheit gespeichert werden und aus ihr bei einer vorgebbaren Abgabeleistung der korrespondierende abgabeleistungsbezogene Abschaltmittelwert ausgelesen wird. Je nach extern vorgegebener Abgabeleistung werden verschiedene abgabeleistungsbezogene Abschaltmittelwerte der wenigstens einen Windenergieanlage zugeordnet.

Vorzugsweise werden den wenigstens zwei gespeicherten Abschaltmittelwerten Mittlungszeiten zugeordnet. Die aus den wenigstens zwei gespeicherten Abschaltmittelwerten ermittelten abgabeleistungsbezogenen Mittelwerte sind dann auch den Mittlungszeiten zugeordnet. Die gleitenden Mittelwerte der Windgeschwindigkeit werden vorzugsweise durch die Windgeschwindigkeitsmesseinrichtung, die an der Gondel der Windenergieanlage angeordnet ist, gemessen. Die gleitenden Mittelwerte können mit den abgabeleistungsbezogenen Abschaltmittelwerten verglichen werden und bei Überschreiten der abgabeleistungsbezogenen Abschaltmittelwerte für die gleiche Mittlungszeit wird die wenigstens eine Windenergieanlage oder auch Gruppe von Windenergieanlagen automatisch durch eine Abschalteinrichtung abgeschaltet. Die Höhe der Abschaltmittelwerte verhält sich vorzugsweise umgekehrt zur Länge der Mittlungszeit.

Die vorzugsweise durch den Netzbetreiber oder Windparkbetreiber erfolgte Vorgabe der Abgabeleistung kann an die einzelne Windenergieanlage oder an den Windpark als Ganzes erfolgen. Die Gesamtleistung wird intern ggf. durch eine Zuordnungseinheit aufgeteilt und von jeder einzelnen Windenergieanlage oder Gruppe von Windenergieanlagen eine vorgegebene Teilleistung abgefordert.

Eine Windenergieanlage des erfindungsgemäßen Windparks weist eine Messeinrichtung zur Ermittlung eines Istwertes einer Windgeschwindigkeit und/oder eines damit verbundenen Parameters auf. Vorzugsweise handelt es sich bei dieser Messeinrichtung um eine Windgeschwindigkeitsmesseinrichtung.

Eine Windenergieanlage des Windparks weist vorzugsweise einen Steuereingang auf, durch den eine veränderbare Abgabeleistung und/oder ein damit verbundener Parameter, insbesondere durch einen externen Netzbetreiber vorgebbar ist. Der veränderbaren Abgabeleistung ist ein abgabeleistungsbezogener Abschaltwert zuordnenbar. Der abgabeleistungsbezogene Abschaltwert ist entweder auch extern vorgebbar oder intern bestimmbar, z.B. berechenbar. Die Zuordnung trägt der Tatsache Rechnung, dass Abschaltwerte bei hohen vorgegebenen Abgabeleistungen geringer gewählt werden müssen, um eine Überbeanspruchung der Windenergieanlage zu verhindern. In einer erfindungsgemäßen Zuordnungseinrichtung ist dem wenigstens einen Istwert einer Windgeschwindigkeit und/oder eines damit verbundenen Parameters, ein abgabeleistungsbezogener Abschaltwert zugeordnet. Diese beiden Werte können in einer Vergleichseinrichtung miteinander verglichen werden, und bei Überschreiten des abgabeleistungsbezogenen Abschaltwertes durch den Istwert ist die Windenergieanlage abschaltbar.

In einer bevorzugten Ausführungsform der Erfindung, ist die Messeinrichtung als Windgeschwindigkeitsmesseinrichtung ausgelegt, die gleitende Mittelwerte der Windgeschwindigkeit für wenigstens eine, vorzugsweise jedoch mehrere vorgegebene Mittlungszeiten ermittelt. Zu einer vorgegebenen Abgabeleistung ist für jede Mittlungszeit ein zugeordneter abgabeleistungsbezogener Abschaltmittelwert ermittelbar. Dieses geschieht vorzugsweise in einer Zuordnungseinrichtung, die der wenigstens einen Windenergieanlage wenigstens zwei Abschaltmittelwerte für die wenigstens eine vorgegebene Mittlungszeit zuordnet, und die jeder der wenigstens zwei Abschaltmittelwerte einer zugehörigen Abgabeleistung zuordnet. In einer Bestimmungseinheit ist die aus den wenigstens zwei Abschaltmittelwerten und der zugehörigen Abgabeleistung ein mit der veränderbar vorgegebenen Abgabeleistung korrespondierender, abgabeleistungsbezogener Abschaltmittelwert bestimmbar. In einer erfindungsgemäßen Vergleichseinrichtung ist der gleitende Mittelwert der Windgeschwindigkeit mit dem der vorgegebenen Abgabeleistung zugeordneten Abschaltmittelwert vergleichbar und in einer Abschalteinrichtung ist die wenigstens eine Windenergieanlage automatisch abschaltbar, wenn der gleitende Mittelwert für die wenigstens eine vorgegebene Mittlungszeit den abgabeleistungsbezogenen Abschaltmittelwert überschreitet.

Die Erfindung wird anhand von drei Ausführungsbeispielen in fünf Figuren beschrieben. Dabei zeigen:
- Fig. 1a: schematische Ansicht eines erfindungsgemäßen Windparks in einer ersten Ausführungsform,
- Fig. 1b: schematische Ansicht eines Windparks in einer zweiten Ausführungsform,
- Fig. 2: eine Tabelle 1 von drei Gruppen von Windenergieanlagen zügeordneten Sätzen von Abschaltmittelwerten und Mittlungszeiten,
- Fig. 3: eine Tabelle 2 mit Anschaltmittelwerten und Mittlungszeiten,
- Fig. 4: eine Tabelle 3 von Abschaltmittelwerten und zugehörigen Abgabeleistungen, sowie daraus berechneten abgabeleistungsbezogenen Abschaltmittelwerten bei vorgegebenen Abgabeleistungen,
- Fig. 5: Windenergieanlage in einer dritten Ausführungsform der Erfindung mit Betriebseinrichtungen.

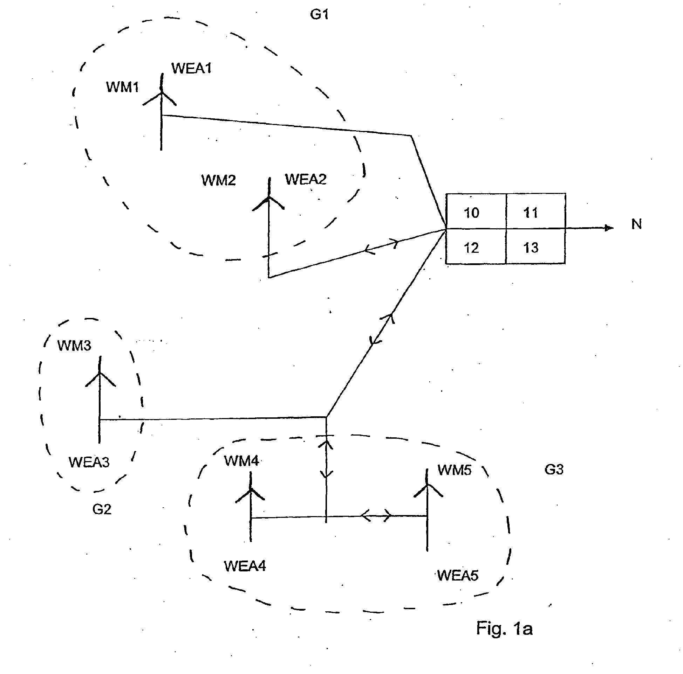

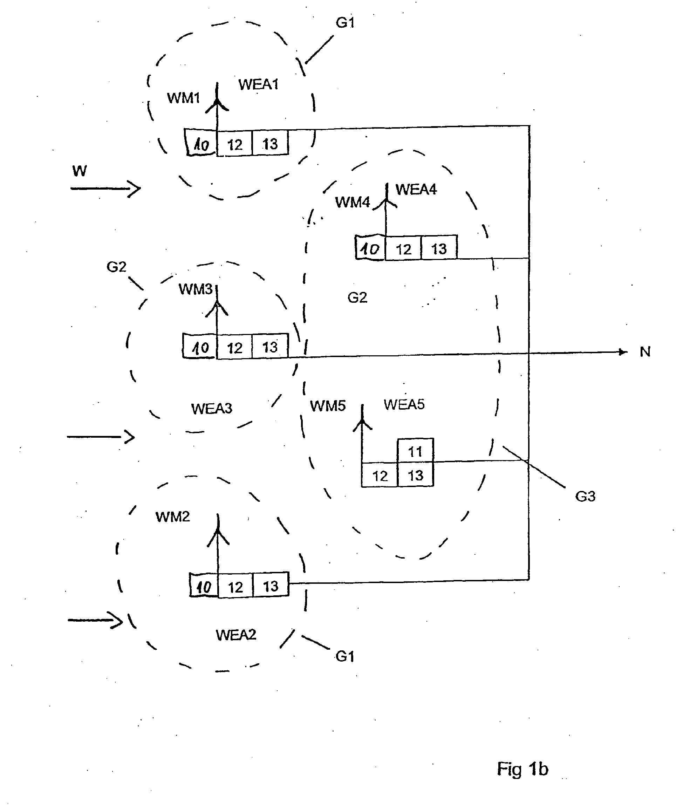

Der in Fig. 1 a dargestellte Windpark weist fünf Windenergieanlagen WEA1, WEA2, WEA 3, WEA4, WEA5 auf, deren generierter Strom einem öffentlichen Stromnetz N zugeführt wird. Die fünf Windenergieanlagen WEA1, WEA2, WEA3, WEA4, WEA5 sind in drei Gruppen G1, G2, G3 aufgeteilt. Die erste Gruppe G1 umfasst die Windenergieanlage WEA1 und WEA2 und die zweite Gruppe G2 umfasst die einzelne Windenergieanlage WEA3 und die vierte Gruppe G4 umfasst die beiden Windenergieanlage WEA4 und WEA5. An jeder der fünf Windenergieanlagen WEA1, WEA2, WEA3, WEA4, WEA5 ist jeweils ein Windgeschwindigkeitsmesser WM 1, ..., WM5 am Maschinenhaus angeordnet, um die jeweils an der einzelnen Windenergieanlage WEA1, WEA2, WEA3, WEA4, WEA5 auftretende Windgeschwindigkeit zu messen. Jeder Windgeschwindigkeitsmesser WM1, ..., WM5 übermittelt die gemessenen Windgeschwindigkeitswerte als Daten einer zentralen Datenverarbeitungseinheit 10, in der für drei verschiedene Mittlungszeiten t1=10min, t2=1min, t3=1s drei gleitende Mittelwerte vt1(WEA1), vt2(WEA1), vt3(WEA1) für die erste Windenergieanlage WEA1 und für jede weiter Windenergieanlage, bis hin zu den drei gleitenden Mittelwerten vt1(WEA5), vt2(WEA5), vt3(WEA5) der fünften Windenergieanlage WEA5 ständig berechnet werden.

Alternativ zu der Ermittlung gleitender Mittelwerte ist auch jede andere Art von Mittelwertbildung, z.B. durch ein pt1-Glied oder sonstige Tiefpassfunktion oder die Verwendung von wenig Speicherplatz benötigenden up-down-countem denkbar.

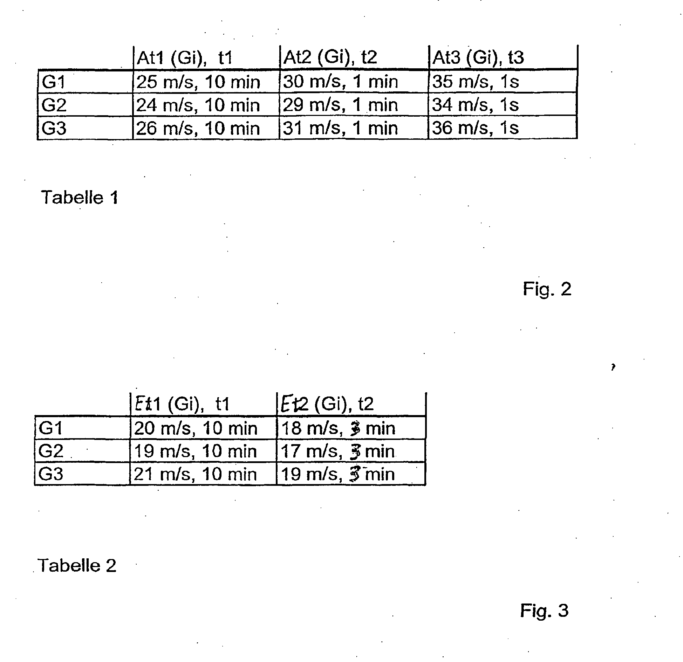

Der Gruppe G1 ist ein Satz von den drei Mittlungszeiten t1, t2, t3 zugehörigen Abschaltmittelwerten At1(G1), At2(G1), At3(G1) zugeordnet. Entsprechend ist den beiden Gruppen G2, G3 jeweils ein denselben drei Mittlungszeiten t1, t2, t3 zugeordneter Satz an Abschaltwerten At1(G2), At2(G2), At3(G2) bzw. At1(G3), At2(G3) und At3(G3) zugeordnet. Fig.2 zeigt die den drei Gruppen G1, G2, G3 zugeordneten Zahlenpaare bestehend aus Abschaltmittelwert und Mittlungszeit in tabellarischer Form.

Gemäß Tabelle 1 sind der ersten Mittlungszeit t1=10min die Abschaltmittelwerte At1(G1)=25m/s, At1(G2)-24m/s und At1(G3)=26m/s zugeordnet. Die verschiedenen derselben Mittlungszeit zugeordneten Abschaltmittelwerte unterscheiden sich damit nur geringfügig, nämlich um 1m/s voneinander.

Die der zweiten Mittlungszeit t2=1min zugeordneten Abschaltmittelwerte At2(G1)=30m/s, At2(G2)=29m/s und At2(G3)=31m/s unterscheiden sich ebenfalls nur geringfügig, nämlich auch um 1m/s voneinander. Dasselbe gilt für die der dritten Mittlungszeit t3=1s zugeordneten drei Abschaltmittelwerte At3(G1)=35m/s, At3(G2)=34m/s und At3(G3)=36m/s.

Alternativ sind die Abschaltmittelwerte At2(Gi) der Mittlungszeit t2 um jeweils einen so genannten Gustfaktor G(ti) höher gewählt als die Abschaltmittelwerte At1(Gi) der Mittlungszeit t1. Der Gustfaktor G(ti) beträgt vorzugsweise G(t2)=1,2. Entsprechend berechnen sich die Abschaltmittelwerte At3(Gi) der kürzeren Mittfungszeit t3 durch Multiplikation mit einem höheren Gustfaktor G(t3)=1,4. Im Gegensatz zu den Werten At2(Gi) und At3(Gi) der Tabelle1 sind die entsprechenden durch Multiplikation mit dem Gustfaktor berechneten Werte weiter aufgespreizt.

Mittels einer zentralen Zuordnungseinrichtung 11 werden die fünf Windenergieanlagen WEA1, WEA2, WEA3, WEA4, WEA5 zunächst in die drei Gruppen G1, G2, G3 aufgeteilt und jeder Windenergieanlage WEA1, WEA2, WEA13, WEA4, WEA5 wird der zur Gruppe G1, G2, G3 gehörige Zahlenpaarsatz gemäß Fig. 2 zugeordnet.

In einer zentralen Vergleichseinrichtung 12 werden die in der Datenverarbeitungseinrichtung 10 fünfzehn laufend ermittelten, gleitenden Mittelwerte vt1(WE41), ..., vt3(WEA5) mit den zugehörigen Abschaltmittelwerten At1(G1), ..., At3(G3) verglichen und bei Überschreiten eines Abschaltmittelwertes At1(G1),...,

At3(G3) durch einen zugehörigen gleitenden Mittelwert vt1(WEA1), ..., vt3(WEA5), werden genau die Windenergieanlagen WEA1, ..., WEA5 abgeschaltet, bei denen eine Überschreitung des Abschaltmittelwertes At1(G1), ..., At3(G3) durch den gleitenden Mittelwert vt1(WEA1), ..., vt3(WEA3) festgestellt wurde. Für das Abschalten ist eine zentrale Abschalteinrichtung 13 vorgesehen.

Fig. 1b zeigt einen Windpark in einer zweiten Ausführungsform der Erfindung. Dabei sind die Windenergieanlagen WEA1, WEA2, WEA 3, WEA 4, WEA 5 in zwei senkrecht zu einer Hauptwindrichtung W zueinander parallelen Reihen angeordnet. In der ersten Reihe sind die Windenergieanlagen der ersten und zweiten Gruppe G1 und G2 vorgesehen. Dabei sind die Windenergieanlagen WEA 1, WEA 2 der ersten Gruppe G1 nicht benachbart, sondern getrennt voneinander lokalisiert, was den Vorteil bietet, dass eine lokale Windböe nicht die ganze Gruppe eines Parks ausbläst. Die Gruppe G3 enthält WEA4 und WEA5, die bezogen auf die Windrichtung W in der zweiten Reihe liegen.

Es ist auch denkbar, dass in Erweiterung des Ausführungsbeispiels in Fig. 1b bei der Vorgabe der Abschaltmittelwerte berücksichtigt wird, dass in einem Windpark in Abhängigkeit von der Windparkreihe im längeren zeitlichen Mittel, z.B. über einen Tag, unterschiedliche Windgeschwindigkeiten vorliegen, z. B.:
1. Reihe: 25 m/s,
2. Reihe: 23 m/s,
3. Reihe: 24 m/s,
4. Reihe: 23 m/s,
5. Reihe: 22,5 m/s.

Die vorgegebenen Abschaltwerte müssen um diese Differenz verändert werden, um zu vermeiden, dass eine einzige Böe, den ganzen Park ausbläst. Die erste Gruppe G1 wird durch die Windenergiealgen der 1. Reihe gebildet, die zweite Gruppe G2 wird durch die Windenergieanlagen der 2. Reihe gebildet usw. Die Differenz der Abschaltwerte der ersten Gruppe G1 und der zweiten Gruppe G2 beträgt dann nicht 1m/s, gemäß Tabelle 1, sondern die Abschaltwerte der Gruppe G2 sind um 3 m/s kleiner als die Abschaltwerte der Gruppe G1 usw.

Es ist auch denkbar, dass die Windenergieanlagen WEA1, WEA2, WEA 3, WEA4, WEA5 einer Gruppe G1, G2, G3 unterschiedlichen Reihen zugeordnet sind.

An jeder einzelnen Windenergieanlage WEA1, WEA2, WEA 3, WEA4, WEA5 sind jeweils eine Vergleichseinrichtung 12, eine Abschalteinrichtung 13 und die Datenverarbeitungseinheit 10 dezentral vorgesehen. Die Berechnung der gleitenden Mittelwerte erfolgt räumlich bei der zugeordneten Windenergieanlage WEA1, ..., WEA5.

Die Zuordnungseinrichtung 11 ist einfach und zentral, aber räumlich nicht separiert, sondern als Modul in einer der Windenergieanlagen, hier in der Windenergieanlage WEA5, vorgesehen. Diese Windenergieanlage WEA5 übernimmt die Funktion einer Master-Windenergieanlage. Das Vertauschen der Gruppen von Abschaltmittelwerte At1(G1), ..., At3(G3) wird durch eine zentrale Zuordnungseinrichtung 11 vorgenommen, die als Modul einer der Windenergieanlagen WEA5 zugeordnet ist.

Wenn beispielsweise während der letzten zehn Minuten im gesamten Windpark eine durchschnittliche Windgeschwindigkeit von 24,5 m/s gemessen wurde, so werden die Windenergieanlagen der zweiten Gruppe G2, also die WEA3 abgeschaltet. Wenn während der letzten wenigstens 10 Minuten eine durchschnittliche Windgeschwindigkeit von 25m/s erreicht wurde, werden die Windenergieanlagen der ersten und der zweiten Gruppe G1 und G2 abgeschaltet, das sind hier die Windenergieanlagen WEA1, WEA2 und WEA3.

Da die Windgeschwindigkeitmessung durch die Windgeschwindigkeitmessgeräte WM1, ..., WM5 an den einzelnen Windenergieanlagen WEA1, WEA2, WEA3, WEA4, WEA5 erfolgt, können sich Messunterschiede der Windgeschwindigkeit an den Windenergieanlagen einer Gruppe G1, G2, G3 ergeben. In diesem Ausführungsbeispiel wird die Windenergieanlage einer Gruppe G1, G2, G3 bei Überschreitung eines der zugehörigen Abschaltmittelwerte At1(G1),..., At3(G3) abgeschaltet.

Die Abschalteinrichtung 13 ermöglicht das Abschalten einzelner Windenergieanlagen WEA1, WEA2, WEA3, WEA4, WEA5 einer Gruppe G1, G2, G3. In dem Windpark gemäß Fig. 1 kann bei einem gleitenden Mittelwert der Windgeschwindigkeit von 25m/s über 10 Minuten, neben den Windenergieanlagen der Gruppe G2, beispielsweise nur eine der Windenergieanlagen WEA1, WEA2 der Gruppe G1 abgeschaltet werden, während das Abschalten der zweiten Windenergieanlage der Gruppe G1 zeitverzögert oder gar nicht erfolgt.

Die Einordnung der Windenergieanlagen WEA1, WEA2, WEA3, WEA4, WEA5 in Gruppen G1, G2, G3 mit zugeordneten Abschaltmittelwerten At1(G1),...,At3(G3) und Mittlungszeiten t1, ...t3, in der beschrieben Weise, ermöglicht es, einem "Ausblasen" des gesamten Windparks durch einen stärkeren Wind entgegenzuwirken, da bei Überschreitung von bestimmten Grenzwindgeschwindigkeiten nur einzelne Gruppen G1, G2, G3 von Windenergieanlagen, aber nicht der ganze Windpark abgeschaltet werden oder anders ausgedrückt Teile des Windparks bereits vor Erreichen der höchstmöglichen Abschaltgeschwindigkeit abgeschaltet werden.

Die Werte der Tabelle 1 tragen der Tatsache Rechnung, dass eine Windenergieanlage über kurze Zeiten auch höheren Windgeschwindigkeiten standhalten kann, ohne Schaden zu nehmen. So schaltet die Windenergieanlage bei kurzfristigen Windgeschwindigkeitsanstiegen auf beispielsweise 27 m/s während einer Zeitdauer von beispielsweise drei Minuten überhaupt nicht ab. Wenn die Windböen jedoch eine höhere Windgeschwindigkeit erreichen, können nach verhältnismäßig kurzer Zeit schon Windenergieanlagen abgeschaltet werden.

Ein entsprechendes Verfahren wird zum Anschalten der Windenergieanlage oder des Windenergieanlagenparks angewendet.

Die Vergleichseinrichtung 12 prüft nach dem Abschalten ebenso das Unterschreiten von Anschaltmittelwerten. Nach einem Unterschreiten während einer Mittlungszeit ti des Anschaltmittelwertes Eti(Gi) durch die an einer Windenergieanlage WEA1, ..., WEA5 mit dem Windmesser WM1, ..., WM5 gemessenen Windgeschwindigkeit, wird die zugehörige Windenergieanlage WEA1, ..., WEA5 wieder angeschaltet. Um ein zu häufiges An- und Ausschalten der Windenergieanlagen zu vermeiden, bilden Abschaltwerte Ati(Gi) und Anschaltwerte Eti(Gi) eine Hysterese aus. Die derselben Mittlungszeit ti und derselben Gruppe Gi zugeordneten Anschaltwerte Eti(Gi) liegen unterhalb der Abschaltmittelwerte Ati(Gi). Der Abstand zwischen Anschaltwert Eti(Gi) und Abschaltwert Ati(Gi) derselben Windenergieanlage wird mit kürzer werdender Mittlungszeit größer. Tabelle 2 zeigt Anschaltmittelwerte für zwei verschiedene Mittlungszeiten t1=10min und t2=3min. Der Abstand der Anschaltmittelwerte At2(Gi) ist in Tabelle 2 gleich dem Abstand der zur selben Gruppe gehörigen Anschaltmittelwerte At1(Gi).

Nicht dargestellt ist der alternativ durch Division mit einem Gustfaktor G(ti) ermittelte Anschaltwert Et2(Gi). Die Verwendung eines Gustfaktors G(ti) zur Berechnung der Anschaltmittelwerte Et2(Gi) aus den Anschaltmittelwerten Et1(Gi) führt wiederum zu einem geringfügigen Aufspreizten der Abstände.

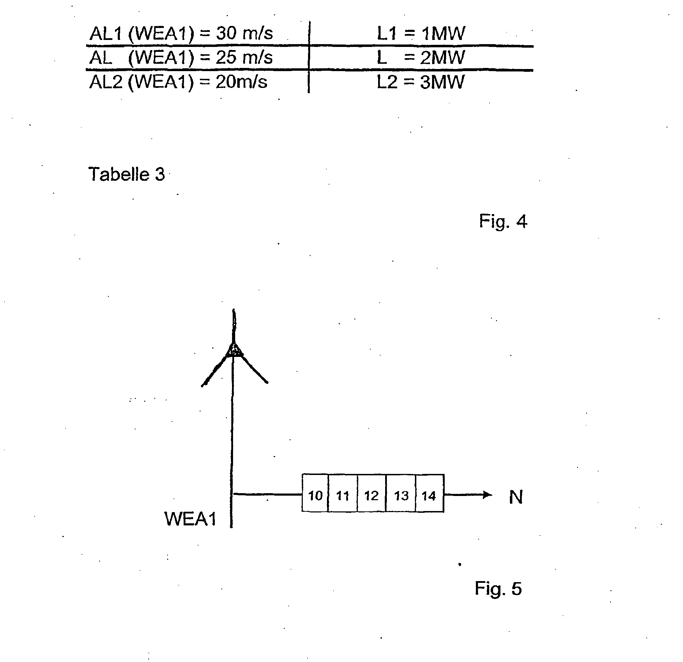

Die in der Tabelle 3 der Fig. 4 den Abgabeleistungen L1 und L2 zugeordneten Abschaltmittelwerte AL1(WEA1) und AL2(WEA1) beziehen sich zunächst auf eine einzelne Windenergieanlage WEA1. Die Windenergieanlage WEA1 kann auch Bestandteil des Windparks, gemäß Fig.1, sein. Die Abgabeleistung wird von einem Windparkbetreiber vorgegeben. Die Vorgabe kann in Form einer vorgegebenen Abgabeleitung an die einzelne Windenergieanlage, oder die Vorgabe einer Abgabeleistung kann auch an den Windpark als Ganzes erfolgen.

Die einzelne Windenergieanlage WEA1 kann bei einer geringeren Abgabeleistung L1, insbesondere durch Betrieb mit einer geringen Rotordrehzahl, dauerhaft höheren Windgeschwindigkeiten standhalten, ohne eine Schädigung zu erfahren. Die Abschaltmittelwerte AL1(WEA1) können somit bei geringer Abgabeleistung L1 höher bestimmt werden als die Abschaltmittelwerte AL2(WEA1) bei höheren Abgabeleistungen L2.

Die in Fig. 5 dargestellte Windenergieanlage WEA 1 kann bei einer zugehörigen Abgabeleistung L1 von 1 MW dauerhaft Windgeschwindigkeiten von bis zu 30m/s standhalten. Der Abschaltmittelwert AL1(WEA1) wird auf diesen Windgeschwindigkeitswert festgesetzt und in einer Bestimmungseinheit 14 abgelegt. Der Windenergieanlage WEA1 ist ein zweites Paar eines Abschaltmittelwertes AL2(WEA1)=20m/s und einer zugehörigen Abgabeleistung L1 in Höhe der Nennleistung von L2=3MW zugeordnet. Auch dieses Paar wird in der Bestimmungseinheit 14 abgelegt.

In der Bestimmungseinheit 14, die Bestandteil der Datenverarbeitungseinheit 10 sein kann, werden Abschaltmittelwerte AL (WEA1) für jede vorgegebene Abgabeleistung L bestimmt. Wenn der Windparkbetreiber eine beliebige Abgabeleistung L über einen Steuereingang vorgibt, bestimmt die Bestimmungseinheit 14 aus den zwei abgelegten Abschaltmittelwerten AL1(WEA1), AL2(WEA1) und den beiden zugehörigen, abgelegten Abgabeleistungen L1, L2 einen korrespondierenden abgabeleistungsbezogenen Abschaltmittelwert AL(WEA1). Die Bestimmung kann durch lineare oder nichtlineare Interpolation über die beiden abgelegten Abschaltmittelwerte AL1(WEA1), AL2(WEA1) in der Bestimmungseinheit 14 erfolgen. In dem Ausführungsbeispiel gemäß Tabelle 3 berechnet die Bestimmungseinheit 14 aus den beiden abgelegten Abschaltmittelwerten AL1(WEA1)=30m/s und AL2(WEA1)=20m/s bei korrespondierenden abgelegten Abgabeleistungen L1=1 MW und L2=3MW bei einer vorgegebenen Abgabeleistung von L= 2MW einen Abschaltmittelwert AL(WEA1)=25m/s. Es ist alternativ auch möglich, eine feine Tabelle von Abschalmittelwerten AL(WEA1) und zugehörigen Abgabeleistungen L(WEA1) in der Bestimmungseinheit 14 abzulegen, und bei vorgegebenen Abgabeleistungen werden deren zugeordnete Abschaltmittelwerte bei Bedarf ausgelesen.

Es ist auch ein Verbindung der Verfahren zum Abschalten der einzelnen Windenergieanlage WEA1 gemäß Fig.4 und Fig.5 und des Windparks WEA1, ..., WEA5 gemäß Fig. 1a, 1b und Fig.2 vorgesehen. Eine dem Windpark vorgegebene Leistung L wird im Verhältnis der Höhen der einzelnen Nennleistungen der Windenergieanlagen WEA1,..., WEA5 durch die Zuordnungseinrichtung 11 aufgespaltet und jeder Windenergieanlage WEA1, ..., WEA 5 eine vorgegebene Teilleistung zugeordnet.

Die Abschaltmittelwerte AL(WEA1) der Windenergieanlage WEA1 sind von der Mittlungszeit t1, t2, t3 abhängig. Die Abschaltwerte der Tabelle 3 beziehen sich auf eine Mittlungszeit von t1=10min und auf die Gruppe G1. Für Mittlungszeiten t2=1 min und t3=1s, gemäß Tabelle 1, sind die drei Abschaltmittelwerte AL1(WEA1), AL(WEA1), AL2(WEA1) der Gruppe G1 um jeweils etwa 5m/s bzw. 10m/s höher als in Tabelle 3 dargestellt. Für die beiden anderen Gruppen G2 und G3 sind die abgelegten Abschaltmittelwerte AL1, AL2 demgegenüber um 1 m/s verringert bzw. erhöht. Aus den verringerten und erhöhten abgelegten Abschaltmittelwerten interpoliert man einen zur gleichen vorgegebenen Abgabeleistung verringerter bzw. erhöhter Abschaltmittelwert AL.

In der Bestimmungseinheit 14 einer einzelnen Windenergieanlage WEA1 werden zu jeder der drei Mittlungszeiten t1, t2 und t3 jeweils wenigstens zwei auf sie angepasste Zahlenpaare bestehend aus vorgegebener Abgabeleistung L1, L2 und korrespondierendem vorgegebenen Abschaltmittelwert AL1(WEA1) bzw.AL2(WEA2) abgelegt.

Dann ist jedem Tabellenfeld der Tabelle 1 einer Mittlungszeit t1, t2, t3 nicht nur ein einziger Abschaltmittelwert At1(G1),..., At2(G3) zugeordnet, sondern jeder der Abschaltmittelwerte (z.B. At1(G1)) hängt wiederum von der zugehörigen Teilabgabeleistung L ab, wie in Tabelle 3 dargestellt.

In der Vergleichseinrichtung 12 werden die gleitenden Mittelwerte vt1(WEA1), vt2(WEA2) und vt3(WEA3) der Windgeschwindigkeit, mit dem derselben Mittlungszeit t1, t2, t3 zugehörigen Abschaltmittelwert verglichen, und die zugeordnete Windenergieanlage oder Gruppe G1, G2, G3 von Windenergieanlagen wird automatisch abgeschaltet.

Vorzugsweise wird zu der beschriebenen Ermittlung des gleitenden Mittelwertes der Windgeschwindigkeit für drei verschiedene Mittlungszeiten zusätzlich der Einstellwinkel der Rotorblätter erfasst und sowohl bei Überschreiten eines Abschaltwinkels als auch bei Überschreiten des Abschaltmittelwertes der Windgeschwindigkeit wird die Windenergieanlage abzuschalten. Somit wird sichergestellt, dass die Windenergieanlage auch bei Versagen der Windmesseinrichtung abgeschaltet wird.

## Patentansprüche

1. Verfahren zum Betreiben eines Windparks mit mindestens zwei Windenergieanlagen (WEA1, WEA2, WEA3, WEA4, WEA5), der zum Anschluss an ein Stromnetz bestimmt ist, indem
für jede der mindestens zwei Windenergieanlagen (WEA1, WEA2, ..., WEA5) wenigstens ein Istwert (vt1(WEA1), ..., vt1(WEA5)) einer Windgeschwindigkeit und/oder eines damit verbundenen Parameters ermittelt wird,
die mindestens zwei Windenergieanlagen (WEA1, WEA2, WEA3, WEA4, WEA5) zumindest zeitweise in wenigstens zwei vorgebbare Gruppen (G1, G2, G3) aufgeteilt werden
und jeder Windenergieanlage der ersten Gruppe (G1) wenigstens ein erster Abschaltwert (At1(G1)) und jeder Windenergieanlage der zweiten Gruppe (G2) wenigstens ein vom wenigstens einen ersten Abschaltwert (At1(G1)) verschiedener zweiter Abschaltwert (At1 (G2)) zugeordnet wird
und der wenigstens eine Istwert (vt1(WEA1),..., vt1(WEA5)) einem der Abschaltwerte (At1(G1), ..., At1(G3)) zugeordnet wird und
die Istwerte (vt1(WEA1), ..., vt1(WEA5)) mit den zugeordneten Abschaltwerten (At1(G1), ..., At1(G3)) verglichen werden
und bei Überschreiten eines Abschaltwertes (At1(G1), .... At1(G3)) durch den zugeordneten Istwert (vt1(WEA1), vt1(WEA5)) die dem Abschaltwert (At1(G1), ..., At1(G3)) zugeordnete Windenergieanlage oder Gruppe von Windenergieanlagen (G1, G2, G3) automatisch abgeschaltet wird und die den wenigstens zwei Gruppen (G1, G2, G3) zugeordneten Sätze verschiedener Abschaltwerte (At1(G1), ..., At1(G3)) zwischen den wenigstens zwei Gruppen (G1, G2, G3) getauscht werden, um eine langfristige Überlastung einer Gruppe (G1, G2, G3) von Windenergieanlagen (WEA1, WEA2, ..., WEA5) durch die Wahl besonders hoher Abschaltwerte (At1(G1), ..., At1(G3)) zu verringern.

2. Verfahren nach Anspruch 1,
**dadurch gekennzeichnet, dass** die Istwerte als Mittelwerte (vt1(WEA1), ..., vt3(WEA3)) der Windgeschwindigkeit für wenigstens eine vorgegebene Mittlungszeit (t1, t2, t3) jeder der mindestens zwei Windenergieanlagen (WEW1, ..., WEA5) ermittelt werden
und jeder Windenergieanlage der ersten Gruppe (G1) wenigstens ein erster
Abschaltwert (At1(G1), At2(G1), At3(G1)) für die wenigstens eine vorgegebene Mittlungszeit (t1, t2, t3), und jeder Windenergieanlage der zweiten Gruppe (G2) wenigstens ein vom wenigstens einen ersten Abschaltwert (At1(G1), At2(G1), At3(G1)) verschiedener zweiter Abschaltwert (At1(G2), At2(G2), At3(G2)) für die wenigstens eine vorgegebene Mittlungszeit (t1, t2, t3) zugeordnet wird und die Mittelwerte (vt1(WEA1), ..., vt3(WEA3)) mit den zugeordneten Abschaltwerten (At1(G1), ..., At3(G3)) verglichen werden
und bei Überschreiten eines Abschaltwertes (At1(G1), ..., At3(G3)) durch den zugeordneten Mittelwert (vt1(WEA1), ..., vt3(WEA3)) für die wenigstens eine vorgegebene Mittlungszeit (t1, t2, t3) die dem Abschaltwert (At1(G1), ..., At3(G3)) zugeordnete Windenergieanlage oder Gruppe von Windenergieanlagen (G1, G2, G3) automatisch abgeschaltet wird.

3. Verfahren nach Anspruch 1 oder 2,
**dadurch gekennzeichnet, dass** die den wenigstens zwei Gruppen (G1, G2, G3) zugeordneten Abschaltwerte ((At1 (G1), ..., At3(G3)) verändert werden.

4. Verfahren nach Anspruch 1, 2 oder 3,
**dadurch gekennzeichnet, dass** wenigstens einer Gruppe (G1, G2, G3) verschiedene Abschaltwerte (At1(G1), ..., At3(G3)) für verschiedene Mittlungszeiten (t1, t2, t3) zugeordnet werden und die Abschaltwerte (At1(G1), ..., At3(G3)) desto höher gewählt werden, je kürzer die Mittlungszeiten (t1, t2, t3) gewählt werden.

5. Windpark zur Durchführung eines Verfahrens nach einem der Ansprüche 1 bis 4 mit wenigstens zwei Windenergieanlagen (WEA1, WEA2, WEA3, WEA4, WEA5), der zum Anschluss an ein Stromnetz bestimmt ist, mit
einer an jeweils einer Windenergieanlage (WEA1, ..., WEA5) angeordneten Messeinrichtung (WM1, ..., WM5), die wenigstens einen Istwert (vt1(WEA1),..., vt1 (WEA5)) einer Windgeschwindigkeit oder eines damit verbundenen Parameters ermittelt,
einer Zuordnungseinrichtung (11), die die mindestens zwei Windenergieanlagen (WEA1, WEA2, WEA3, WEA4, WEA5) zumindest zeitweise in wenigstens zwei vorgebbare Gruppen (G1, G2, G3) aufteilt und jeder Windenergieanlage (WEA1, WEA2) einer ersten Gruppe (G1) wenigstens einen ersten Abschaltwert (At1(G1)) und jeder Windenergieanlage (WEA3) einer zweiten Gruppe (G2) einen vom ersten Abschaltwert (At1(G1)) verschiedenen zweiten Abschaltwert (At1(G2)) zuordnet, einer Vergleichseinrichtung (12) für den Vergleich des wenigstens einen Istwertes (vt1(WEA1),..., vt1(WEA3)) einer Windgeschwindigkeit oder eines damit verbundenen Parameters mit den zugeordneten Abschaltwerten (At1(G1), ..., At1(G3)),
einer Abschalteinrichtung (13), die bei Überschreiten eines Abschaltwertes (At1(G1), ..., At1(G3)) durch den Istwert (vt1(WEA1), ..., vt1(WEA5)) einer Windgeschwindigkeit oder eines damit verbundenen Parameters, die dem Abschaltmittelwert (At1(G1), ..., At1(G3)) zugeordnete Windenergieanlage oder Gruppe (G1, G2, G3) von Windenergieanlagen abschaltet, und wobei die Zuordnungseinrichtung (11) den wenigstens zwei Gruppen (G1, G2, G3) zugeordnete Sätze verschiedener Abschaltwerte (At1(G1), ..., At1(G3)) zwischen den wenigstens zwei Gruppen (G1, G2, G3) tauscht, um eine langfristige Überlastung einer Gruppe (G1, G2, G3) von Windenergieanlagen (WEA1, WEA2, ..., WEA5) durch die Wahl besonders hoher Abschaltwerte (At1(G1), ..., At1(G3)) zu verringern.

6. Windpark nach Anspruch 5,
**gekennzeichnet durch** die an jeweils einer der Windenergieanlagen (WEA1, ..., WEA5) angeordnete Windgeschwindigkeitsmesseinrichtung (WM1, ..., WM5), die Mittelwerte (vt1(WEA1), ..., vt3(WEA3)) der Windgeschwindigkeit für wenigstens eine vorgegebene Mittlungszeit (t1, t2, t3) ermittelt,
die Zuordnungseinrichtung (11), die die mindestens zwei Windenergieanlagen (WEA1, WEA2, WEA3, WEA4, WEA5) zumindest zeitweise in wenigstens zwei der vorgebbaren Gruppen (G1, G2, G3) aufteilt und jeder Windenergieanlage (WEA1, WEA2) der einen ersten Gruppe (G1) wenigstens den einen ersten Abschaltmittelwert (At1(G1), At2(G1), At3(G1)) und jeder Windenergieanlage (WEA3) der einen zweiten Gruppe (G2) den vom ersten Abschaltmittelwert (At1(G1), At2(G1), At3(G1)) verschiedenen zweiten Abschaltmittelwert (At1(G2), At2(G2), At3(G2)) zuordnet,
die Vergleichseinrichtung (12)'für den Vergleich der Mittelwerte (vt1(WEA1), ..., vt3(WEA3)) mit den zugeordneten Abschaltmittelwerten (At1(G1), ..., At3(G3)), die Abschalteinrichtung (13), die bei Überschreiten eines Abschaltmittelwertes (At1(G1), ..., At3(G3)) **durch** den Mittelwert (vt1(WEA1), ..., vt3(WEA3)) die dem Abschaltmittelwert (At1(G1), ..., At3(G3)) zugeordnete Windenergieanlage oder Gruppe (G1, G2, G3) von Windenergieanlagen abschaltet.

7. Windpark nach Anspruch 5 oder 6,
**dadurch gekennzeichnet, dass** die Abschaltmittelwerte (At1(G1), ..., At3(G3)) durch die Zuordnungseinrichtung (11) veränderbar sind und/oder durch die Zuordnungseinrichtung (11) wenigstens einer Gruppe (G1, G2, G3) verschiedene Abschaltmittelwerte (At1(G1), ..., At3(G3)) für verschiedene Mittlungszeiten (t1, t2, t3) zuordnenbar sind und die Abschaltmittelwerte (At1(G1), ..., At3(G3)) desto höher sind, je kürzer die Mittlungszeiten (t1, t2, t3) sind.

8. Windpark nach Anspruch 5, 6 oder 7,
**dadurch gekennzeichnet, dass** durch die Zuordnungseinrichtung (11) die den wenigstens zwei Gruppen (G1, G2, G3) zugeordneten Sätze verschiedener Abschaltmittelwerte (At1(G1),...,At3(G3)) zwischen den wenigstens zwei Gruppen (G1, G2, G3) tauschbar sind.

## Claims

1. Method of operating a wind farm comprising at least two wind turbine generator systems (WEA1, WEA2, WEA3, WEA4, WEA5), which is intended for connection to an electric power network, in which
for each of the at least two wind turbine generator systems (WEA1, WEA2 ... WEA5) at least one actual value (vt1 (WEA1),..., vt1(WEA5)) for a wind speed and/or for a parameter associated with wind speed is determined,
the at least two wind turbine generator systems (WEA1, WEA2, WEA3, WEA4, WEA5) are divided, at least temporarily, into at least two predeterminable groups (G1, G2, G3),
and each wind turbine generator system of the first group (G1) is assigned at least one first disconnect value (At1(G1) and each wind turbine generator system of the second group (G2) is assigned at least one second disconnect value (At1(G2), which is different from the at least one first disconnect value (At1(G1),
and the at least one actual value (vt1(WEA1), ..., vt1(WEA5)) is assigned to one of the disconnect values (At1(G1), ..., At1(G3)), and
the actual values (vt1(WEA1), ..., vt1 (WEA3)) are compared with the assigned disconnect values (At1(G1), ..., At1(G3)),
and if the assigned actual value (vt1(WEA1), ..., vt1(WEA5)) exceeds a disconnect value (At1(G1), ..., At1 (G3)), the wind turbine generator system or group of wind turbine generator systems (G1, G2, G3) which is assigned to the disconnect value (At1(G1), ..., At1(G3)) is automatically disconnected and
the sets of different disconnect values ((At1(G1), ..., At1(G3)) assigned to the at least two groups (G1, G2, G3) are rearranged between the at least two groups (G1, G2, G3), in order to minimize a long-term overload of one group (G1, G2, G3) of wind turbine generator systems (WEA1, WEA2, ..., WEA5) by selecting particulary high disconnect values (At1(G1), ..., At1(G3)).

2. Method according to claim 1,
**characterized in that** the actual values are determined as mean values (vt1(WEA1), ..., vt3(WEA3)) for the wind speed for at least one predetermined averaging period (t1, t2, t3) for each of the at least two wind turbine generator systems (WEA1, ..., WEA5),
and each wind turbine generator system of the first group (G1) is assigned at least one first disconnect value (At1(G1), At2(G1), At3(G1)) for the at least one predetermined averaging period (t1, t2, t3), and each wind turbine generator system of the second group (G2) is assigned at least one second disconnect value (At1(G2), At2(G2), At3(G2)) for the at least one predetermined averaging period (t1, t2, t3), which value is different from the at least one first disconnect value (At1(G1), At2(G1), At3(G1)),
and the mean values (vt1(WEA1), ..., vt3(WEA3)) are compared with the assigned disconnect values (At1(G1), ..., At3(G3)),
and if the assigned mean value (vt1(WEA1), ..., vt3(WEA3)) for the at least one predetermined averaging period (t1, t2, t3) exceeds a disconnect value (At1(G1), ..., At3(G3)), the wind turbine generator system or group of wind turbine generator systems (G1, G2, G3) which is assigned to the disconnect value (At1(G1), ..., At3(G3)) is automatically disconnected.

3. Method according to claim 1 or 2,
**characterized in that** the disconnect values ((At1(G1), ..., At3(G3)) assigned to the at least two groups (G1, G2, G3) are changed.

4. Method according to claim 1, 2 or 3,
**characterized in that** at least one group (G1, G2, G3) is assigned different disconnect values (At1(G1), ..., At3(G3)) for different averaging periods (t1, t2, t3), and the disconnect values (At1(G1), ..., At3(G3)) are selected to be higher, the shorter the selected averaging periods (t1, t2, t3).

5. Wind farm for implementing a method according to any one of claims 1 to 4, comprising at least two wind turbine generator systems (WEA1, WEA2, WEA3, WEA4, WEA5), which is intended for connection to an electric power network, with a measuring device (WM1, ..., WM5), located at each wind turbine generator system (WEA1, ..., WEA5), which determines at least one actual value (vt1(WEA1), ..., vt1(WEA5)) for a wind speed or a parameter associated with wind speed,
an allocation device (11), which divides the at least two wind turbine generator systems (WEA1, WEA2, WEA3, WEA4, WEA5) at least temporarily into at least two predeterminable groups (G1, G2, G3) and assigns at least one first disconnect value (At1(G1) to each wind turbine generator system (WEA1, WEA2) of a first group (G1), and assigns a second disconnect value (At1(G2) which is different from the first disconnect value (At1(G1) to each wind turbine generator system (WEA3) of a second group (G2),
a comparator unit (12) for comparing the at least one actual value (vt1(WEA1), ..., vt1(WEA3)) of a wind speed or a parameter associated with wind speed with the assigned disconnect values (At1(G1), ..., At1(G3)),
a disconnection device (13) which disconnects the wind turbine generator system or group (G1, G2, G3) of wind turbine generator systems assigned to the mean disconnect value (At1(G1), ..., At1(G3)) in the event that the actual value (vt1(WEA1), ..., vt1(WEA3)) of a wind speed or a parameter associated with wind speed exceeds a disconnect value (At1(G1), ..., At1(G3)) and whereby
the allocation device (11) rearranges sets of different disconnect values assigned to the at least two groups (G1, G2, G3) between the at least two groups (G1, G2, G3) in order to minimize a long-term overload of one group (G1, G2, G3) of wind turbine generator systems (WEA1, WEA2, ..., WEA5) by selecting particulary high disconnect values (At1(G1), ..., At1(G3)).

6. Wind farm according to claim 5,
**characterized by** the anemometer (WM1, ..., WM5) located at each wind turbine generator system (WEA1, ..., WEA5), which determines mean values (vt1(WEA1), ..., vt3(WEA3)) of the wind speed for at least one predetermined averaging period (t1, t2, t3),
the allocation device (11), which divides the at least two wind turbine generator systems (WEA1, WEA2, WEA3, WEA4, WEA5) at least temporarily into at least two of the predeterminable groups (G1, G2, G3), and assigns at least one first mean disconnect value (At1(G1), At2(G1), At3(G1)) to each wind turbine generator system (WEA1, WEA2) of a first group (G1), and assigns a second mean disconnect value (At1 (G2), At2(G2), At3(G2)), which is different from the first mean disconnect value (At1(G1), At2(G1), At3(G1)), to each wind turbine generator system (WEA3) of a second group (G2),
the comparator unit (12) for comparing the mean values (vt1(WEA1), ..., vt3(WEA3)) with the assigned mean disconnect values (At1(G1), ..., At3(G3)),
the disconnection device (13), which disconnects the wind turbine generator system or group (G1, G2, G3) of wind turbine generator systems assigned to the mean disconnect value (At1(G1), ..., At3(G3)) in the event that the mean value (vt1(WEA1), ..., vt3(WEA3)) exceeds a mean disconnect value (At1(G1), ..., At3(G3)).

7. Wind farm according to claim 5 or 6,
**characterized in that** mean disconnect values (At1(G1), ..., At3(G3)) can be changed by the allocation device (11) and/or different mean disconnect values (At1(G1), ..., At3(G3)) for different averaging periods (t1, t2, t3) can be assigned to at least one group (G1, G2, G3) by the allocation device (11), and the mean disconnect values (At1(G1), ..., At3(G3)) are higher, the shorter the averaging periods (t1, t2, t3) are.

8. Wind farm according to claims 5, 6 or 7,
**characterized in that** the sets of different mean disconnect values (At1(G1), ..., At3(G3)) assigned to the at least two groups (G1, G2, G3) by the allocation device can be rearranged between the at least two groups (G1, G2, G3).

## Revendications

1. Procédé pour faire fonctionner un parc éolien avec au moins deux éoliennes (WEA1, WEA2, WEA3, WEA4, WEA5), qui est destiné au branchement à un réseau électrique, au moins une valeur réelle (vt1(WEA1),...vt1(WEA5)) d'une vitesse du vent et/ou d'un paramètre qui lui est lié étant déterminée pour chacune des deux éoliennes qui existent au moins (WEA1, WEA2,..., WEA5), les deux éoliennes qui existent au moins (WEA1, WEA2, WEA3, WEA4, WEA5) étant réparties au moins temporairement en au moins deux groupes qui peuvent être prédéfinis (G1, G2, G3) et au moins une première valeur de coupure (At1(G1)) étant attribuée à chaque éolienne du premier groupe (G1) et au moins une seconde valeur de coupure (At1 (G2)) différente de la première valeur de coupure (At1(G1)) qui existe au moins étant attribuée à chaque éolienne du second groupe (G2) et la valeur réelle qui existe au moins (vt1 (WEA1),...vt1(WEA5)) étant attribuée à l'une des valeurs de coupure (At1(G1),...At1(G3)) et les valeurs réelles (vt1(WEA1),...vt1(WEA5)) étant comparées aux valeurs de coupure associées (At1(G1),..., At1(G3)) et, lors du dépassement d'une valeur de coupure (At1(G1),..., At1(G3)) par la valeur réelle associée (vt1(WEA1),..., vt1(WEA5)) l'éolienne ou le groupe d'éoliennes (G1, G2, G3) qui est associé à la valeur de coupure (At1(G1),..., At1(G3)) étant automatiquement mis hors service et les ensembles de différentes valeurs de coupure (At1(G1),..., At1(G3)) associés aux deux groupes qui existent au moins (G1, G2, G3) étant échangés entre les deux groupes qui existent au moins (G1, G2, G3) pour réduire une surcharge à long terme d'un groupe (G1, G2, G3) d'éoliennes (WEA1, WEA2, ..., WEA5) par la sélection de valeurs de coupure particulièrement élevées (At1(G1),...At1(G3)).

2. Procédé selon la revendication 1, **caractérisé en ce que** les valeurs réelles sont déterminées comme valeurs moyennes (vt1(WEA1),..., vt3(WEA3)) de la vitesse du vent pour au moins une durée moyenne prédéfinie (t1, t2, t3) de chacune des au moins deux éoliennes (WEA1,..., WEA5) et au moins une première valeur de coupure (At1(G1), At2(G1), At3(G1)) est attribuée à chaque éolienne du premier groupe (G1) pour la durée moyenne prédéfinie qui existe au moins (t1, t2, t3) et au moins une seconde valeur de coupure (At1 (G2), At2(G2), At3(G2)) différente de la première valeur de coupure qui existe au moins (At1(G1), At2(G1), At3(G1)) est attribuée à chaque éolienne du second groupe (G2) pour la durée moyenne prédéfinie qui existe au moins (t1, t2, t3) et les valeurs moyennes (vt1(WEA1),..., vt3(WEA3)) sont comparées aux valeurs de coupure associées (At1(G1),..., At3(G3)) et, lors du dépassement d'une valeur de coupure (At1(G1),...,At3(G3)) par la valeur moyenne associée (vt1(WEA1 vt3(WEA3)) pour la durée moyenne prédéfinie qui existe au moins (t1, t2, t3) l'éolienne ou le groupe d'éoliennes (G1, G2, G3) associé à la valeur de coupure (At1(G1),...At3(G3)) est mis hors service automatiquement.

3. Procédé selon la revendication 1 ou 2, **caractérisé en ce que** les valeurs de coupure (At1(G1),...,At3(G3)) associées aux deux groupes qui existent au moins (G1, G2, G3) sont modifiées.

4. Procédé selon la revendication 1, 2 ou 3, **caractérisé en ce que** différentes valeurs de coupure (At1(G1),...At3(G3)) sont associées à au moins un groupe (G1, G2, G3) pour différentes durées moyennes (t1, t2, t3) et les valeurs de coupure (At1(G1),...,At3(G3)) sont sélectionnées d'autant plus élevées que les durées moyennes (t1, t2, t3) sont sélectionnées courtes.

5. Parc éolien pour exécuter un procédé selon l'une des revendications 1 à 4 avec au moins deux éoliennes (WEA1, WEA2, WEA3, WEA4, WEA5), qui est destiné au branchement à un réseau électrique, avec
un dispositif de mesure (WM1,...,WM5) placé sur respectivement une éolienne (WEA1,...,WEA5) qui détermine au moins une valeur réelle (vt1(WEA1),...,vt1(WEA5)) d'une vitesse du vent ou d'un paramètre qui lui est lié, un dispositif d'attribution (11) qui répartit les deux éoliennes qui existent au moins (WEA1, WEA2, WEA3, WEA4, WEA5) au moins temporairement en au moins deux groupes qui peuvent être prédéfinis (G1, G2, G3) et attribue au moins une première valeur de coupure (At1(G1)) à chaque éolienne (WEA1, WEA2) d'un premier groupe (G1) et qui attribue à chaque éolienne (WEA3) d'un second groupe (G2) une seconde valeur de coupure (At1 (G2)) différente de la première valeur de coupure (At1(G1),
un dispositif de comparaison (12) pour la comparaison de la valeur réelle qui existe au moins (vt1(WEA1),...,vt1(WEA3)) d'une vitesse du vent ou d'un paramètre qui lui est lié avec les valeurs de coupure associées (At1(G1),..., At1(G3)),
un dispositif de coupure (13) qui, lors du dépassement d'une valeur de coupure (At1(G1),..., At1 (G3)) par la valeur réelle (vt1(WEA1),...,vt1(WEA5)) d'une vitesse du vent ou d'un paramètre qui lui est lié qui met hors service l'éolienne ou le groupe (G1, G2, G3) d'éoliennes associé à la valeur moyenne de coupure (At1(G1),..., At1(G3)) et le dispositif d'attribution (11) échangeant les ensembles de différentes valeurs de coupure (At1(G1),..., At1 (G3)) associés aux deux groupes qui existent au moins (G1, G2, G3) entre les deux groupes qui existent au moins (G1, G2, G3) pour réduire une surcharge à long terme d'un groupe (G1, G2, G3) d'éoliennes (WEA1, WEA2, ..., WEA5) par la sélection de valeurs de coupure particulièrement élevées (At1(G1),..., At1(G3)).

6. Parc éolien selon la revendication 5, **caractérisé par** le dispositif de mesure de la vitesse du vent (WM1, ..., WM5) placé respectivement sur l'une des éoliennes (WEA1, ..., WEA5) qui détermine les valeurs moyennes (vt1(WEA1),..., vt3(WEA3)) de la vitesse du vent pour au moins une durée moyenne prédéfinie (t1, t2, t3),
le dispositif d'attribution (11) qui répartit les deux éoliennes qui existent au moins (WEA1, WEA2, WEA3, WEA4, WEA5) au moins temporairement en au moins deux des groupes qui peuvent être prédéfinis (G1, G2, G3) et qui attribue à chaque éolienne (WEA1, WEA2) du premier groupe (G1) au moins la première valeur moyenne de coupure (At1(G1), At2(G1), At3(G1)) et à chaque éolienne (WEA3) du second groupe (G2) la seconde valeur moyenne de coupure (At1 (G2), At2(G2), At3(G2)) différente de la première valeur de coupure (At1(G1), At2(G1), At3(G1)),
le dispositif de comparaison (12) pour la comparaison des valeurs moyennes (vt1(WEA1),..., vt3(WEA3)) avec les valeurs moyennes de coupure associées (At1(G1), ..., At3(G3)),
le dispositif de coupure (13) qui, lors du dépassement d'une valeur moyenne de coupure (At1(G1),..., At3(G3)) par la valeur moyenne (vt1(WEA1),..., vt3(WEA3)), met hors service l'éolienne ou le groupe (G1, G2, G3) d'éoliennes associé à la valeur moyenne de coupure (At1(G1),..., At3(G3)).

7. Parc éolien selon la revendication 5 ou 6, **caractérisé en ce que** les valeurs moyennes de coupure (At1(G1), ..., At3(G3)) peuvent être modifiées par le dispositif d'attribution (11) et/ou différentes valeurs moyennes de coupure (At1(G1), ..., At3(G3)) peuvent être attribuées par le dispositif d'attribution (11) à au moins un groupe (G1, G2, G3) pour différentes durées moyennes (t1, t2, t3) et les valeurs moyennes de coupure (At1(G1), ..., At3(G3)) sont d'autant plus élevées que les durées moyennes (t1, t2, t3) sont courtes.

8. Parc éolien selon la revendication 5, 6 ou 7, **caractérisé en ce que** les ensembles de différentes valeurs moyennes de coupure (At1(G1), ..., At3(G3)) associés aux deux groupes qui existent au moins (G1, G2, G3) peuvent être échangés entre les deux groupes qui existent au moins (G1, G2, G3).
